# EUROPEAN PATENT APPLICATION

(11) **EP 0 599 237 A1**
(43) Date of publication of application: **01.06.1994**
(21) Application number: 93118723.1
(22) Date of filing: 22.11.1993
(51) Int. Cl.: G11B 5/31

(54) **Thin film magnetic head**

(30) Priority: 24.11.1992 JP 313070/92
(71) Applicant: MATSUSHITA ELECTRIC INDUSTRIAL CO., LTD., Kadoma-shi, Osaka-fu 571 (JP)
(72) Inventor: Nakamura, Kazuo, Toyonaka-shi, Osaka-fu 560 (JP)
(74) Representative: Eisenführ, Speiser & Partner

(57) **Abstract**

A thin film magnetic head (K1) comprising: a rectangular first substrate (23) which functions as a head substrate; and a rectangular second substrate (24) which functions as a terminal substrate and a cover substrate; wherein the first substrate (23) has a width (12) smaller than a width (13) of the second substrate (24) and is formed with a thin film head element (1) extending from a head portion (20) to a first terminal relay portion (15); wherein the second substrate (24) is formed with a terminal wiring (21) extending from a second terminal relay portion (16) to an input/output terminal portion (2); wherein the first and second substrates (23, 24) are joined to each other such that the first terminal relay portion (15) of the first substrate (23) and the second terminal relay portion (16) of the second substrate (24) are electrically connected to each other; the input/output terminal portion (2) of the second substrate (24) being not covered by the first substrate (23) so as to be exposed.

## Description

### BACKGROUND OF THE INVENTION

The present invention generally relates to a thin film magnetic head and more particularly, to a thin film magnetic head used mainly for a magnetic tape, in which size of one head chip is minimized such that the number of the head chips taken from one wafer is maximized.

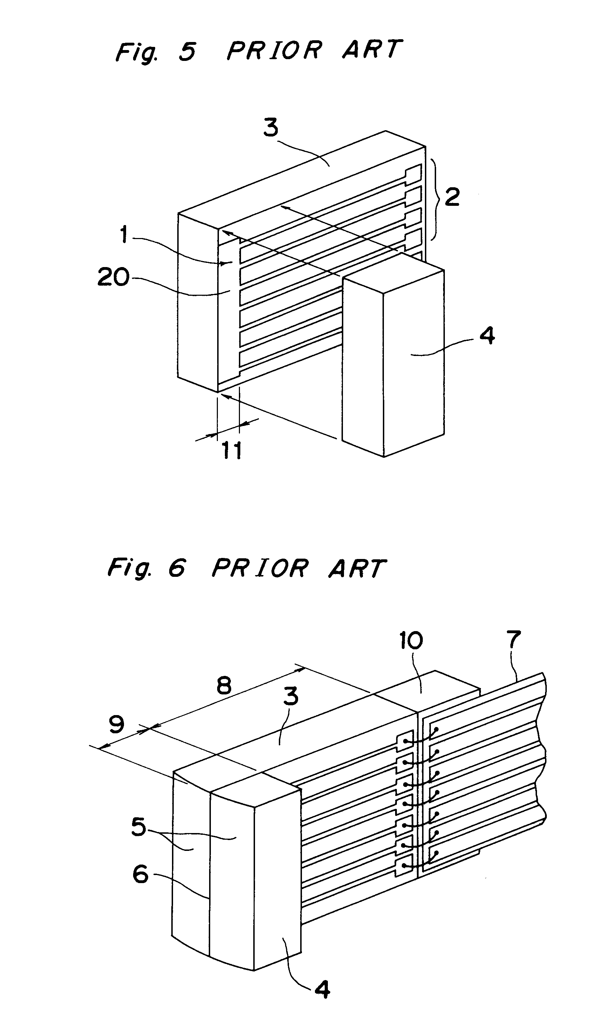

Conventionally, in case a thin film magnetic head is utilized as a head for a magnetic tape (hereinbelow, referred to as a "tape head"), it is necessary to bond a cover substrate to a head substrate. Namely, as shown in Fig. 5, a cover substrate 4 is bonded to a head substrate 3 formed with a thin film head element 1 and an input/output terminal portion 2 so as to partially cover the head substrate 3. Then, the head substrate 3 and the cover substrate 4 are polished to sliding faces 5 of a predetermined radius of curvature for a magnetic tape (not shown) as shown in Fig. 6 and thus, a tape head is obtained. Meanwhile, since the thin film head element 1 per se does not constitute subject matter of the present invention, the detailed description is abbreviated for the sake of brevity.

The cover substrate 4 is required for the tape head for the following reason. Namely, in order to hold the magnetic tape and a gap portion 6 between the head substrate 3 and the cover substrate 4 in excellent contact with each other during travel of the magnetic tape with a reduced spacing between the magnetic tape and the gap portion 6, it is necessary to provide sliding faces of proper areas at opposite sides of the gap portion 6 such that the gap portion 6 exists in a smooth and continuous curved surface.

As shown in Fig. 6, a flexible printed circuit (FPC) 7 is bonded to a rear portion of the tape head of the above described arrangement such that a terminal lead-out portion of the tape head and wiring terminals of the flexible printed circuit 7 are connected to each other by wire bonding, etc. Meanwhile, reference numeral 10 in Fig. 6 denotes a base for the flexible printed circuit 7.

In a direction of depth of the gap portion 6 in Fig. 6, the head substrate 3 is covered by the cover substrate 4 through a dimension 9, while the head substrate 3 is not covered by the cover substrate 4 through a dimension 8. Thus, the direction of depth of the gap portion 6 means the direction of the dimension 8. In view of interference with jig tools mainly in wire bonding, the dimension 8 is necessary as a dimension for mounting the flexible printed circuit 7. As the dimension 8 is reduced further, area of one head chip in a wafer, i.e. head chip size is reduced gradually. As a result, the number of the head chips taken from one wafer is increased and thus, production cost of the tape head is lowered advantageously. However, generally, a dimension 11 of a head portion 20 of the thin film head element 1 in the direction of depth of the gap portion 6 is several hundred /1.m at most, while as large as 2 to 3 mm should be allotted to the dimension 8. This means that the number of the head chips taken from one wafer is substantially determined by mounting requirements of the flexible printed circuit 7.

Therefore, in the known tape head, since the large input/output terminal portion 2 is required to be provided, the number of the head chips taken from one wafer is reduced greatly.

### SUMMARY OF THE INVENTION

Accordingly, an essential object of the present invention is to provide a thin film magnetic head for a magnetic tape, in which size of one head chip is reduced so as to increase the number of the head chips taken from one wafer such that production cost of the thin film magnetic head is lowered.

In order to accomplish this object of the present invention, a thin film magnetic head comprising: a rectangular first substrate which functions as a head substrate; and a rectangular second substrate which functions as a terminal substrate and a cover substrate; wherein the first substrate has a width smaller than a width of the second substrate and is formed with a thin film head element extending from a head portion to a first terminal relay portion; wherein the second substrate is formed with a terminal wiring extending from a second terminal relay portion to an input/output terminal portion; wherein the first and second substrates are joined to each other such that the first terminal relay portion of the first substrate and the second terminal relay portion of the second substrate are electrically connected to each other; the input/output terminal portion of the second substrate being not covered by the first substrate so as to be exposed.

The first and second terminal relay portions are electrically connected to each other by contact bonding or the like. Since the second substrate acts also as the cover substrate of conventional thin film magnetic heads relative to the first substrate, a sliding face can be formed on the second substrate as in the conventional thin film magnetic heads. Furthermore, since the input/output terminal portion of the second substrate is not covered by the first substrate, the input/output terminal portion is exposed in an area for allowing mounting of a flexible printed circuit.

By this arrangement of the thin film magnetic head of the present invention, since width of the first substrate formed with the thin film head element can be reduced sufficiently, the number of head chips taken from one wafer can be increased. Meanwhile, since only the simple terminal wiring is formed on the second substrate, the second substrate can be produced at low cost. Thus, even if the width of the second substrate is set to such a value as to allow mounting of a flexible printed circuit, problems of production cost are mitigated.

In accordance with the present invention, since size of one chip of the thin film magnetic head can be reduced greatly, the number of the head chips taken from one wafer can be increased, thereby resulting in reduction of production cost of the thin film magnetic head.

### BRIEF DESCRIPTION OF THE DRAWINGS

This object and features of the present invention will become apparent from the following description taken in conjunction with the preferred embodiments thereof with reference to the accompanying drawings, in which:
Fig. 1 is an exploded perspective view of a thin film magnetic head according to a first embodiment of the present invention;
Fig. 2 is a top plan view showing one production step of the thin film magnetic head of Fig. 1;
Fig. 3 is a fragmentary front elevational view of a terminal substrate employed in a thin film magnetic head according to a second embodiment of the present invention;
Fig. 4 is an exploded top plan view of a thin film magnetic head according to a third embodiment of the present invention;
Fig. 5 is an exploded perspective view of a prior art thin film magnetic head (already referred to); and
Fig. 6 is a perspective view showing state of completion of production of the prior art thin film magnetic head of Fig. 5 (already referred to).

Before the description of the present invention proceeds, it is to be noted that like parts are designated by like reference numerals throughout several views of the accompanying drawings.

### DETAILED DESCRIPTION OF THE INVENTION

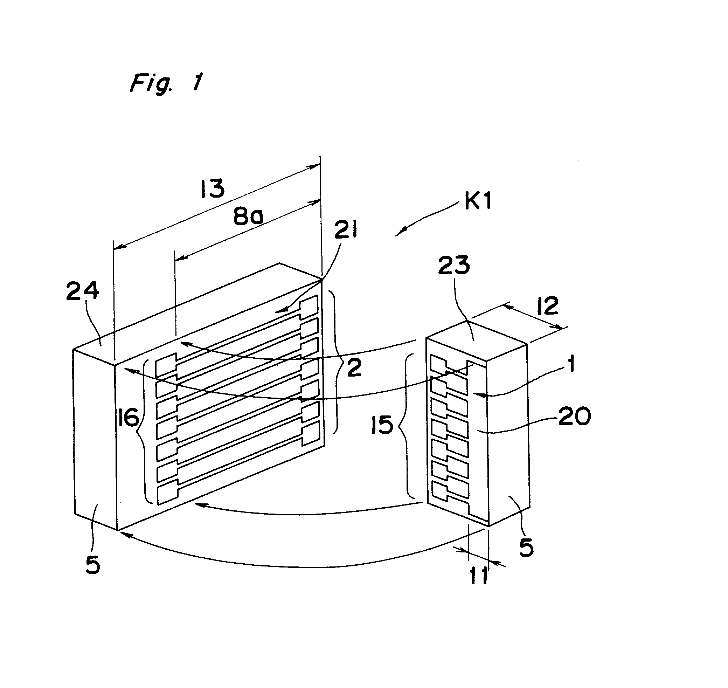

Referring now to the drawings, there is shown in Fig. 1, a thin film magnetic head K1 according to a first embodiment of the present invention. The thin film magnetic head K1 includes a rectangular head substrate 23 acting as a first substrate and a rectangular terminal substrate 24 acting as second substrate. A thin film head element 1 extending from a head portion 20 to a first terminal relay portion 15 is formed on the head substrate 23. Meanwhile, a terminal wiring 21 extending from a second terminal relay portion 16 to an input/output terminal portion 2 is formed on the terminal substrate 24. A width 12 of the head substrate 23 is so set as to be smaller than a width 13 of the terminal substrate 24. Therefore, when the head substrate 23 has been joined to the terminal substrate 24, the input/output terminal portion 2 of the terminal substrate 24 is not covered by the head substrate 23 so as to be exposed.

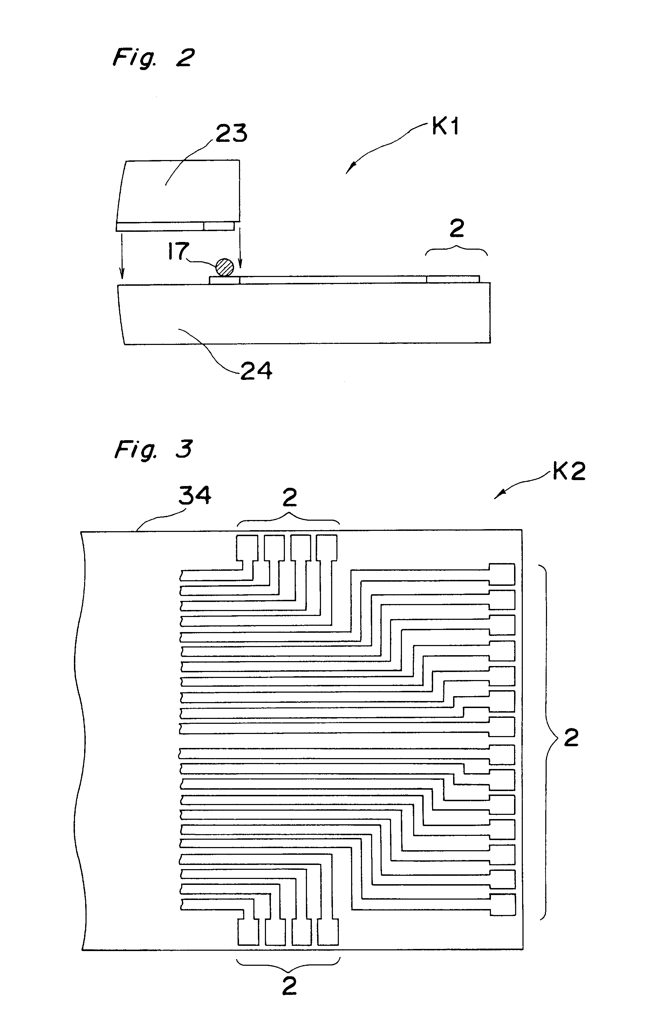

Each of the head substrate 23 and the terminal substrate 24 has a sliding face 5. The head substrate 23 and the terminal substrate 24 are joined to each other such that not only the sliding faces 5 of the head substrate 23 and the terminal substrate 24 are substantially flush with each other but terminals of the first terminal relay portion 15 are, respectively, brought into contact with corresponding terminals of the second terminal relay portion 16. At this time, a thermal contact bonding means 17 such as solder grains is provided at either one of the first and second terminal relay portions 15 and 16 as shown in Fig. 2 such that the first and second terminal relay portions 15 and 16 are electrically connected to each other by thermal contact bonding. Meanwhile, at other portions of the head substrate 23 and the terminal substrate 24 than the first and second terminal relay portions 15 and 16, a bonding means (not shown) such as epoxy resin is provided so as to mechanically couple the head substrate 23 and the terminal substrate 24 with each other. This bonding length, namely, the width 12 of the head substrate 23 should be minimized within a range in which sufficient mechanical strength of bonding can be obtained. Meanwhile, in the terminal substrate 24, a dimension 8a for mounting a flexible printed circuit (FPC) is so set as to allow mounting of the flexible printed circuit without hindrance. After the head substrate 23 and the terminal substrate 24 have been coupled with each other, the sliding faces 5 of the head substrate 23 and the terminal substrate 24 are finished and then, the flexible printed circuit is mounted in a known manner.

By the above described arrangement of the thin film magnetic head K1, since the width 12 of the first substrate, i.e. the head substrate 23 having the thin film head element 1 formed by a plurality of complicated thin film processes can be made sufficiently small, the number of head chips taken from one wafer can be increased. Meanwhile, the second substrate, i.e. the terminal substrate 24 occupies an area similar to that of a head substrate 3 of a prior art thin film magnetic head of Figs. 5 and 6. However, in the thin film magnetic head K1, since only the simple terminal wiring 21 is formed on the terminal substrate 24, the terminal substrate 24 can be produced at low cost, thereby offering no serious problem of production cost.

Fig. 3 shows a rectangular terminal substrate 34 employed in a thin film magnetic head K2 according to a second embodiment of the present invention. Since the second embodiment of the present invention is directed to vicinity of the input/output terminal portion 2 of the terminal substrate 34, only this vicinity is depicted in Fig. 3. In Fig. 3, the input/output terminal portion 2 of the second substrate 34 is so formed as to confront at least two sides of a peripheral edge of a thin film forming face of the second substrate 34.

Meanwhile, a minimum possible pitch of terminals of the input/output terminal portion 2 is limited to about 100 /1.m according to present FPC mounting technology. On the other hand, in thin film technology, a minimum pitch of terminals and lead wires is far smaller than the above mentioned value of 100 /1.m. Moreover, a minimum possible pitch in a contact bonding means for joining first and second terminal relay portions 15 and 16 may be, for example, 50 µm smaller than the above mentioned value of 100 /1.m. This means that the number of terminals capable of being inserted into the second terminal relay portion 16 can be set larger than the number of terminals of the input/output terminal portion 2 for FPC mounting.

Therefore, if the input/output terminal portion 2 is arranged as shown in Fig. 3, the number of terminals of the input/output terminal portion 2 can be set larger than that of the thin film magnetic head K1 of Fig. 1. Therefore, the input/output terminal portion 2 of Fig. 3 is suitable for a head having a larger number of channels. Needless to say, this may be also applied to prior art of Figs. 5 and 6. However, in this case, since the arrangement of Fig. 3 requires a larger mounting dimension for the terminals, size of one head chip becomes large, thereby resulting in disadvantageous reduction of the number of the head chips taken from one wafer. On the contrary, in the present invention, since influence of increase of size of the terminal substrate 34 on production cost is slight, such an arrangement as shown in Fig. 3 can be employed.

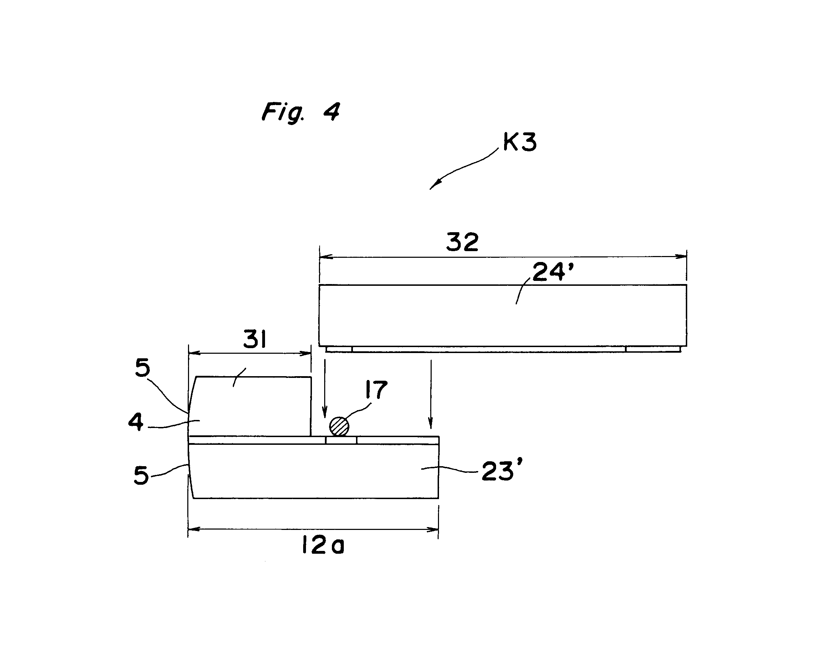

Fig. 4 shows a thin film magnetic head K3 according to a third embodiment of the present invention. The thin film magnetic head K3 includes a rectangular head substrate 23', a rectangular cover substrate 4 and a rectangular terminal substrate 24'. The head substrate 23' is similar to the head substrate 23 of the thin film magnetic head K1. Thus, the thin film head element 1 extending from the head portion 20 to the first terminal relay portion 15 is formed on the head substrate 23'. The cover substrate 4 is similar to that of prior art of Figs. 5 and 6. Therefore, no element is formed on the cover substrate 4. The cover substrate 4 is bonded to the head substrate 23' in a known manner. The terminal substrate 24' is substantially identical with the terminal substrate 24 of the thin film magnetic head K1. Thus, the terminal wiring 21 extending from the second terminal relay portion 16 to the input/output terminal portion 2 is formed on the terminal substrate 24'.

In this arrangement of the thin film magnetic head K3, a width 12a of the head substrate 23' is larger than a width 31 of the cover substrate 4 but is smaller than a width 32 of the terminal substrate 24'. The cover substrate 4 is joined to the head substrate 23' so as to cover at least the head portion 20 of the head substrate 23'. The terminal substrate 24' is joined to the head substrate 23' such that the first terminal relay portion 15 of the head substrate 23' and the second terminal relay portion 16 of the terminal substrate 24' are electrically connected to each other. At this time, the input/output terminal portion 2 of the terminal substrate 24' is not covered by the head substrate 23' so as to be exposed. The width 12a of the head substrate 23', on which mass prodcution efficiency relies upon, becomes smaller than that of prior art of Figs. 5 and 6 but becomes larger than that of Fig. 1. This embodiment has such an advantage that a process for bonding the cover substrate 4 to the head substrate 23' and a process for connecting the first and second terminal relay portions 15 and 16 can be performed separately and thus, optimum techniques can be employed for the processes, respectively.

Furthermore, it is needless to say that the terminal substrate 24' may be modified such that the input/output terminal portion 2 of the terminal substrate 24' has the arrangement of Fig. 3.

## Claims

1. A thin film magnetic head (K1) comprising:
a rectangular first substrate (23) which functions as a head substrate; and
a rectangular second substrate (24) which functions as a terminal substrate and a cover substrate;
wherein the first substrate (23) has a width (12) smaller than a width (13) of the second substrate (24) and is formed with a thin film head element (1) extending from a head portion (20) to a first terminal relay portion (15);
wherein the second substrate (24) is formed with a terminal wiring (21) extending from a second terminal relay portion (16) to an input/output terminal portion (2);
wherein the first and second substrates (23, 24) are joined to each other such that the first terminal relay portion (15) of the first substrate (23) and the second terminal relay portion (16) of the second substrate (24) are electrically connected to each other;
the input/output terminal portion (2) of the second substrate (24) being not covered by the first substrate (23) so as to be exposed.

2. A thin film magnetic head (K2) as claimed in Claim 1, wherein the input/output terminal portion (2) of the second substrate (34) is so formed as to confront at least two sides of a peripheral edge of a thin film forming face of the second substrate (34).

3. A thin film magnetic head (K3) comprising:
a rectangular first substrate (23') which functions as a head substrate;
a rectangular second substrate (4) which functions as a cover substrate; and
a rectangular third substrate (24') which functions as a terminal substrate;
wherein the first substrate (23') has a width (12a) larger than a width (31) of the second substrate (4) but smaller than a width (32) of the third substrate (24') and is formed with a thin film head element (1) extending from a head portion (20) to a first terminal relay portion (15);
wherein the third substrate (24') is formed with a terminal wiring (21) extending from a second terminal relay portion (16) to an input/output terminal portion (2);
wherein the second substrate (4) is joined to the first substrate (23') so as to cover at least the head portion (20) of the first substrate (23');
wherein the third substrate (24') is joined to the first substrate (23') such that the first terminal relay portion (15) of the first substrate (23') and the second terminal relay portion (16) of the third substrate (24') are electrically connected to each other;
the input/output terminal portion (2) of the third substrate (24') being not covered by the first substrate (23') so as to be exposed.

4. A thin film magnetic head (K3) as claimed in Claim 3, wherein the input/output terminal portion (2) of the third substrate (24') is so formed as to confront at least two sides of a peripheral edge of a thin film forming face of the third substrate (24').
